# EUROPÄISCHE PATENTSCHRIFT

(11) **EP 1 143 140 B1**
(45) Veröffentlichungstag und Bekanntmachung des Hinweises auf die Patenterteilung: **14.04.2004**
(21) Anmeldenummer: 01810124.6
(22) Anmeldetag: 07.02.2001
(51) Int. Cl.: F02M 63/02, F02M 59/08, F02M 55/04, F02M 55/02, F02M 55/00, F16L 39/00

(54) **Versorgungsvorrichtung für ein Common Rail System**
Arrangement of common rail system
Configuration d'un système de common rail

(30) Priorität: 01.03.2000 EP 00810168
(43) Veröffentlichungstag der Anmeldung: 10.10.2001
(73) Patentinhaber: Wärtsilä Schweiz AG, 8401 Winterthur (CH)
(72) Erfinder: Hofer, Robert, 8353 Elgg (CH); Desait, Claude, 8405 Winterthur (CH); Natali, Silvano, 9200 Gossau (CH)
(74) Vertreter: Sulzer Management AG

(56) Entgegenhaltungen:
- EP-A- 0 507 191
- EP-A- 0 699 835
- EP-A- 0 976 925
- WO-A-94/27039
- DE-C- 4 335 171
- GB-A- 1 212 818
- GB-A- 2 060 800
- US-A- 4 149 568
- "WORLD'S BIGGEST COMMON RAIL SUCCESSFULLY IN HFO OPERATION" SCHIFF UND HAFEN,DE,SEEHAFEN-VERLAG ERIK BLUMENFELD. HAMBURG, Bd. 51, Nr. 3, März 1999 (1999-03), Seiten 59-60, XP000827413 ISSN: 0938-1643

## Beschreibung

Die Erfindung betrifft eine Versorgungsvorrichtung für ein Common Rail System in einem Grossdieselmotor gemäss dem Oberbegriff des unabhängigen Anspruchs, z.B. siehe WO 9427039.

Grossdieselmotoren werden beispielsweise als Hauptantriebsaggregate für Schiffe oder als Stationäranlagen zur Stromgewinnung eingesetzt. Sie sind meistens als langsam laufende Zweitakt-Kreuzkopfmaschinen oder als Viertakt-Maschinen ausgebildet. Gemäss neuerer Entwicklungen werden in modernen Grossdieselmotoren die Brennstoffeinspritzung, der Gaswechsel und gegebenenfalls Hilfssysteme, z. B. für Steueröl, mit Common Rail Systemen betrieben. Dabei wird mittels Pumpen das jeweilige Fluid, z. B. der Brennstoff für die Einspritzung, ein Hydraulikmedium zur Betätigung der Auslassventile oder ein Arbeitsmedium zur Steuerung der Einspritzung, unter Hochdruck in einen Druckspeicher gefördert, der auch als Akkumulator bezeichnet wird. Mit dem unter Druck stehenden Fluid aus dem jeweiligen Akkumulator werden dann sämtliche Zylinder der Brennkraftmaschine versorgt bzw. die Ventile und die Brennstoffeinspritzvorrichtungen angesteuert.

Im Unterschied zu kleineren Brennkraftmaschinen wie Automobilmotoren existiert bei Common Rail Systemen in Grossdieselmotoren das Problem, dass üblicherweise die Hochdruckpumpen, welche das jeweilige Fluid in den Akkumulator fördern, räumlich sehr weit von den Akkumulatoren entfernt sind. Die Akkumulatoren (Druckspeicher) sind beispielsweise jeweils als rohrähnliche Bauteile mit oder ohne Einbauten ausgestaltet, die sich etwa auf Höhe der Zylinderköpfe entlang des Motors erstrecken. Die Hochdruckpumpen zum Fördern des Brennstoffs und des Hydraulikmediums für die Steuerung der Gaswechselventite werden beispielsweise über Zahnräder von der Kurbelwelle angetrieben und sind daher in der Nähe des Kurbelraums angeodnet. Hieraus ergibt sich ein Abstand zwischen den Pumpen und den Druckspeichern, der einige Meter, beispielsweise etwa zehn Meter und mehr, betragen kann. Zur Verbindung sind daher sehr lange Hochdruckleitungen notwendig, durch welche das jeweilige Fluid unter sehr hohem Druck, im Falle des Brennstoffs z. B. bis zu 2000 bar, gefördert wird. Durch die starken Vibrationen und die dynamischen Druckschwankungen, welche durch die Pulsation des Fluids in der Druckleitung verursacht werden, unterliegen die Druckleitungen sehr starken Belastungen, die eine erhebliche Gefahr von Schäden wie Leckagen oder Brüchen mit sich bringen. Falls aber beispielsweise die Druckleitung zwischen der Brennstoffpumpe und dem zugehörigen Druckspeicher für den Brennstoff bricht oder in hohem Masse undicht wird, muss der Motor zwangsläufig abgestellt werden, was im Falle eines Schiffsantriebs zur vollständigen Manövrierunfähigkeit führt.

Diesen Nachteilen will die Erfindung Abhilfe schaffen. Es ist daher eine Aufgabe der Erfindung, eine Versorgungsvorrichtung für ein Common Rail System in einem Grossdieselmotor vorzuschlagen, welches die Gefahr eines Ausfalls des Common Rail Systems und damit des gesamten Grossdieselmotors deutlich reduziert und dadurch die Betriebssicherheit erhöht.

Die diese Aufgabe lösende Versorgungsvorrichtung für ein Common Rail System in einem Grossdieselmotor ist durch die Merkmale des unabhängigen Anspruchs gekennzeichnet.

Erfindungsgemäss wird also eine Versorgungsvorrichtung für ein Common Rail System in einem Grossdieselmotor vorgeschlagen, mit einem Druckspeicher für ein Fluid, mit einer Pumpeinrichtung zum Fördern des Fluids in den Druckspeicher, sowie mit Verbindungsmitteln, durch welche das von der Pumpeinrichtung geförderte Fluid in den Druckspeicher einbringbar ist, wobei die Verbindungsmittel zwei separate Druckleitungen umfassen, von denen jede mit der Pumpeinrichtung und dem Druckspeicher verbunden ist.

Im normalen, das heisst störungsfreien Betrieb des Common Rail Systems fördert die Pumpeinrichtung durch beide Druckleitungen Fluid in den Druckspeicher des Common Rail Systems. Falls nun eine der beiden Druckleitungen einen Schaden aufweist, beispielsweise eine starke Leckage, so kann der Druckspeicher immer noch über die andere Druckleitung mit Fluid versorgt werden, sodass das Common Rail System einsatzfähig bleibt. Somit kann der Grossdieselmotor bei Beschädigung einer Druckleitung zumindest noch mit reduzierter Leistung weiter betrieben werden. Falls es sich um den Hauptmotor eines Schiffs handelt, bleibt das Schiff also bei einem solchen Schaden noch manövrierfähig und kann zumindest mit reduzierter Fahrt weiterfahren.

Jede Druckleitung weist sowohl an ihrem mit dem Druckspeicher verbundenen Ende als auch an ihrem mit der Pumpeinrichtung verbundenen Ende ein Absperrorgan auf. Durch diese Massnahme kann im Falle eines Schadens an einer Druckleitung diese vollständig vom Common Rail System getrennt werden, sodass ein unkontrolliertes Ausströmen des von der Pumpeinrichtung geförderten Fluids oder des Fluids aus dem Druckspeicher vermieden werden kann.

Vorzugsweise umfasst jede Druckleitung mehrere miteinander verbundene Segmente, wobei in der Nähe jeder Verbindung zwischen benachbarten Segmenten jeweils eine Abstützung zum Fixieren der Druckleitung vorgesehen ist. Die Verbindungen, die bevorzugt als Verschraubungen ausgebildet sind, sind besonders empfindlich gegenüber mechanischen Belastungen wie Biegeschwingungen, die in Druckleitungen auftreten, welche über längere Strecken nicht abgestützt sind. Durch die Massnahme, in der Nähe der Verbindungen jeweils Abstützungen vorzusehen, können Biegeschwingungen nicht oder nur stark gedämpft auf die Verbindungen einwirken, wodurch sich die Störanfälligkeit der Verbindungen erheblich reduzieren lässt. Die Abstützungen sind beispielsweise in einer die Druckleitung umgebenden Schutzleitung integriert, welche bei einer Hochdruckleitung üblicherweise vorgesehen sein muss.

Ferner ist es vorteilhaft, wenn die beiden Druckleitungen im wesentlichen parallel zueinander verlaufen, und die Segmente für die beiden Druckleitungen paarweise gleich sind. Dies hat den Vorteil, dass weniger Ersatzteile für die Druckleitungen bereitgestellt werden müssen und die Herstellung der Druckleitungen kostengünstiger ist. Zudem kann im Falle von Leckagen in beiden Druckleitungen aus den noch unbeschädigten Segmenten beider Druckleitungen eine funktionsfähige Druckleitung zusammengefügt werden, sodass ein weiterer Betrieb des Common Rail Systems ermöglicht wird.

Eine weitere vorteilhafte Massnahme besteht darin, für jede Druckleitung mehrere Zwischenabstützungen zum Fixieren der Druckleitung vorzusehen, wobei der Abstand zwischen benachbarten Zwischenabstützungen der einen Druckleitung verschieden ist vom Abstand benachbarter Zwischenabstützungen der anderen Druckleitung. Dies hat den Vorteil, dass die Belastungsspektren für die beiden Druckleitungen unterschiedlich sind. Insbesondere lässt es sich vermeiden, dass in beiden Druckleitungen Biegeschwingungen gleicher Frequenz und/oder gleicher Wellenlänge auftreten. Somit wird die Gefahr erheblich reduziert, dass beide Druckleitungen gleichzeitig oder an der gleichen Stelle schadhaft werden. Die Zwischenabstützungen sind am Motor befestigt.

Falls es im Druckspeicher, der ja gemäss dem Common-Rail-Prinzip als gemeinsamer Akkumulator für alle Zylinder dient, zu einem ungewollten stärkeren Druckabfall kommt, beispielsweise durch eine Leckage, so muss bei bekannten Vorrichtungen der Grossdieselmotor abgestellt werden. Um dieses Problem zu lösen, umfasst gemäss einer vorteilhaften Variante der Erfindung der Druckspeicher zwei separate Speichereinheiten, sowie einen mit den beiden Druckleitungen verbundene Verteiler, der das Fluid aus den Druckleitungen wahlweise in beide Speichereinheiten leitet oder nur in die eine oder nur in die andere der beiden Speichereinheiten. Somit kann im Störfall die schadhafte Speichereinheit vom Common Rail System abgekoppelt werden und der Motor in einem Notbetriebsmodus mit den Zylindern, die mit der noch funktionsfähigen Speichereinheit verbunden sind, weiterlaufen.

Auch ist es vorteilhaft an jeder Druckleitung Mittel zum Lokalisieren von Leckagen vorzusehen, damit im Störfall der Ort der Leckage oder des Schadens möglichst rasch identifiziert werden kann, und die entsprechenden Gegenmassnahmen bzw. Reparaturen vorgenommen werden können.

Die Pumpeinrichtung umfasst vorzugsweise zur Erhöhung der gesamten Förderleistung und aus Rendundanzgründen mehrere Pumpen, welche das Fluid in die beiden Druckleitungen förderen. Dabei ist es vorteilhaft, wenn die Pumpeinrichtung ferner einen Zwischenspeicher zum Dämpfen von Druckpulsationen umfasst, wobei jede Pumpe jeweils über eine separate Pumpenleitung mit dem Zwischenspeicher verbunden ist, und die beiden Druckleitungen mit dem Zwischenspeicher verbunden sind. Durch den Zwischenspeicher werden die von den Pumpen erzeugten dynamischen Druckanteile wie Druckpulsationen erheblich gedämpft, bevor das Fluid in die Druckleitungen gelangt. Durch diese Massnahme lässt sich die mechanische Belastung der Druckleitungen - und damit die Gefahr von Leckagen oder anderen Schäden in diesen - deutlich zu reduziern.

Als besonders vorteilhaft und kostengünstig hat es sich erwiesen, wenn jede Pumpenleitung einen Pumpenspeicher aufweist oder als Pumpenspeicher ausgestaltet ist, wobei der Pumpenspeicher zum Dämpfen der von der zugehörigen Pumpe generierten Druckpulsationen dient und vorzugsweise ein Volumen aufweist, das in einem Verhältnis von eins zu zwei bis eins zu acht zum Volumen des Zwischenspeichers steht. Dadurch werden die von der jeweiligen Pumpe generierten Druckpulsationen zunächst individuell durch die kleineren Pumpenspeicher gedämpft und anschliessend erfolgt eine weitere Dämpfung des gesamten, von allen Pumpen geförderten Fluids in dem gemeinsamen grösseren Zwischenspeicher.

Die erfindungsgemässe Versorgungsvorrichtung eignet sich für alle Typen von Grossdieselmotoren, insbesondere für solche, die nach dem Zweitakt- oder dem Viertaktverfahren arbeiten. Die erfindungsgemässe Versorgungsvorrichtung ist zudem für alle Arten von Common Rail Systemen geeignet, insbesondere für Systeme zur Brennstoffeinspritzung, Hydrauliksysteme zur Betätigung der Gaswechselventile, speziell der Auslassventile, und Hydrauliksystem zur Steuerung der Einspritzsysteme.

Weitere vorteilhafte Massnahmen und bevorzugte Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen, teilweise symbolischen Zeichnung zeigen:
- Fig. 1:: einen Schnitt durch einen Grossdieselmotor mit mehreren Common Rail Systemen,
- Fig. 2:: eine symbolische Darstellung eines Ausführungsbeispiels einer erfindungsgemässen Versorgungsvorrichtung,
- Fig. 3:: eine Variante für den Druckspeicher,
- Fig. 4:: eine Schnittdarstellung einer Druckleitung mit mehreren Details,
- Fig. 5:: einen Querschnitt durch eine Zwischenabstützung entlang der Linie V-V in Fig. 4,
- Fig. 6:: einen Querschnitt durch eine Abstützung entlang der Linie VI-VI in Fig. 4,
- Fig. 7:: einen Querschnitt durch eine Verbindung zweier Segmente der Druckleitung entlang der Linie VII-VII in Fig. 4,
- Fig. 8:: eine Variante für die Druckleitung mit einer Drehhalterung, und
- Fig. 9:: ein weiteres Ausführungsbeispiel einer Pumpeinrichtung.

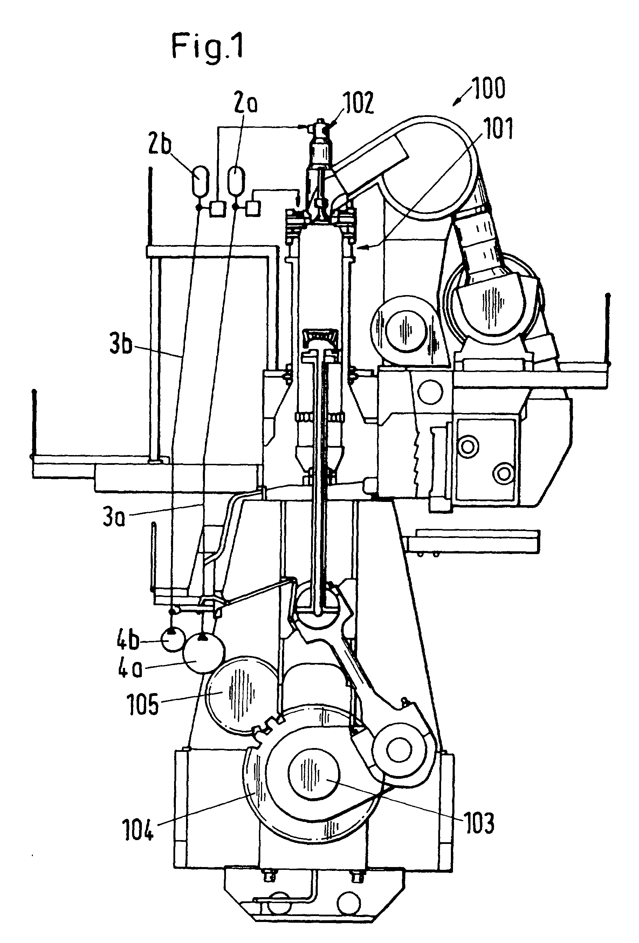

Zum besseren Verständnis zeigt Fig. 1 in einer schematischen Schnittdarstellung ein Ausführungsbeispiel eines Grossdieselmotors 100 mit einem seiner üblicherweise mehreren Zylinder 101. Solche Motoren finden beispielsweise als Hauptantriebsaggregat eines Schiffes oder in einer Stationäranlage zur Stromgewinnung Verwendung. Im speziellen ist dieser Grossdieselmotor 100 als langsam laufender Zweitakt-Kreuzkopf-Grossdieselmotor mit Längsspülung ausgestaltet und wird elektronisch bzw. elektrisch-hydraulisch gesteuert, das heisst, er hat keine Steuerwelle im klassischen Sinne zur mechanisch-hydraulischen Steuerung des Gaswechsels und der Einspritzung. Das Einspritzsystem und die Hydrauliksysteme, mit denen die Einspritzung, der Gaswechsel und gegebenenfalls Hilfssysteme wie das Anlasssystem betrieben werden, sind mittels elektromagnetischer Vorsteuerventile ansteuerbar, die mittels elektrischer Signale betätigt werden, welche von einer Kontrollvorrichtung kommen. Diese bestimmt mittels des Kurbelwinkels, der Drehzahl des Motors und eventuell weiterer Zustandsgrössen den jeweils optimalen Zeitraum sowie die jeweils optimale Brennstoffmenge für die Einspritzung bzw. die Zeitpunkte für das Öffnen und Schliessen der Auslassventile und sendet dementsprechend die elektrischen Steuersignale an die Vorsteuerventile, die daraufhin das zugehörige Einspritzsystem bzw. die Hydrauliksysteme betätigen.

In dem Grossdieselmotor 100 sind mehrere Common Rail Systeme vorgesehen, wobei zumindest die Einspritzung und der Gaswechsel nach dem Common-Rail-Prinzip betrieben werden, das heisst in jedem solchen System ist jeweils ein gemeinsamer Druckspeicher vorgesehen, welcher mit sämtlichen Zylindern verbunden ist. In diesem Druckspeicher ist das entsprechende Fluid, also z. B. der Brennstoff für die Einspritzung oder ein Hydraulikmedium für die Betätigung der Auslassventile unter hohem Druck gespeichert und steht für die verschiedenen Zylinder 101 bereit.

In Fig. 1 sind zwei Common-Rail-Systeme mit ihren jeweiligen Versorgungsvorrichtungen dargestellt, nämlich eines für den Brennstoff und eines für die Betätigung der Auslassventile 102. Die Versorgungsvorrichtung für das Einspritzsystem umfasst einen Druckspeicher 2a für den Brennstoff, eine Pumpeinrichtung 4a zum Fördern des Brennstoffs in den Druckspeicher 2a sowie Verbindungsmittel 3a, durch welche der von der Pumpeinrichtung 4a geförderte Brennstoff in den Druckspeicher 2a einbringbar ist. Die Pumpeinrichtung 4a wird von der Kurbelwelle 103 des Motors 100 über ein Kurbelwellenzahnrad 104 und ein mit diesem kämmendes Zahnrad 105 angetrieben und fördert den Brennstoff unter Hochdruck, z. B. bis zu 2000 bar, speziell etwa 1200 bar, in den Druckspeicher 2a, welcher die hier nicht näher beschriebenen Einspritzvorrichtungen aller Zylinder mit Brennstoff versorgt.

Die Versorgungsvorrichtung für das Hydrauliksystem zur Betätigung der Auslassventile 102 umfasst eine ebenfalls von der Kurbelwelle 103 oder einem Hilfsmotor angetriebene Pumpeinrichtung 4b, welche ein Hydraulikmedium, beispielsweise ein Hydraulik- oder Steueröl, über Verbindungsmittel 3b in einen Druckspeicher 2b fördert, wo es unter einem Druck von beispielsweise 200 bar für die Betätigung der Auslassventile 102 aller Zylinder 101 bereitsteht.

Durch die räumliche Anordnung bedingt, beträgt die Länge der Verbindungsmittel 3a,3b zwischen den Pumpeinrichtungen 4a,4b und den zugehörigen Druckspeichern 2a,2b typischerweise jeweils einige Meter, beispielsweise etwa zehn Meter oder sogar noch mehr.

Es kann noch ein drittes, in Fig. 1 nicht dargestelltes Common Rail System mit einer Versorgungsvorrichtung vorgesehen sein, welches der hydraulischen Betätigung der Einspritzvorrichtungen dient. Dieses System, in dessen Druckspeicher ebenfalls ein Hydraulikmedium unter Druck gespeichert ist, und seine Versorgungsvorrichtung kann in sinngemäss gleicher Weise ausgestaltet sein wie das System für die Betätigung der Auslassventile 102.

Die Druckspeicher 2a,2b sind als rohrähnliche Bauteile mit oder ohne Einbauten ausgestaltet, die sich jeweils etwa auf Höhe der Zylinderköpfe entlang des Motors 100 erstrecken.

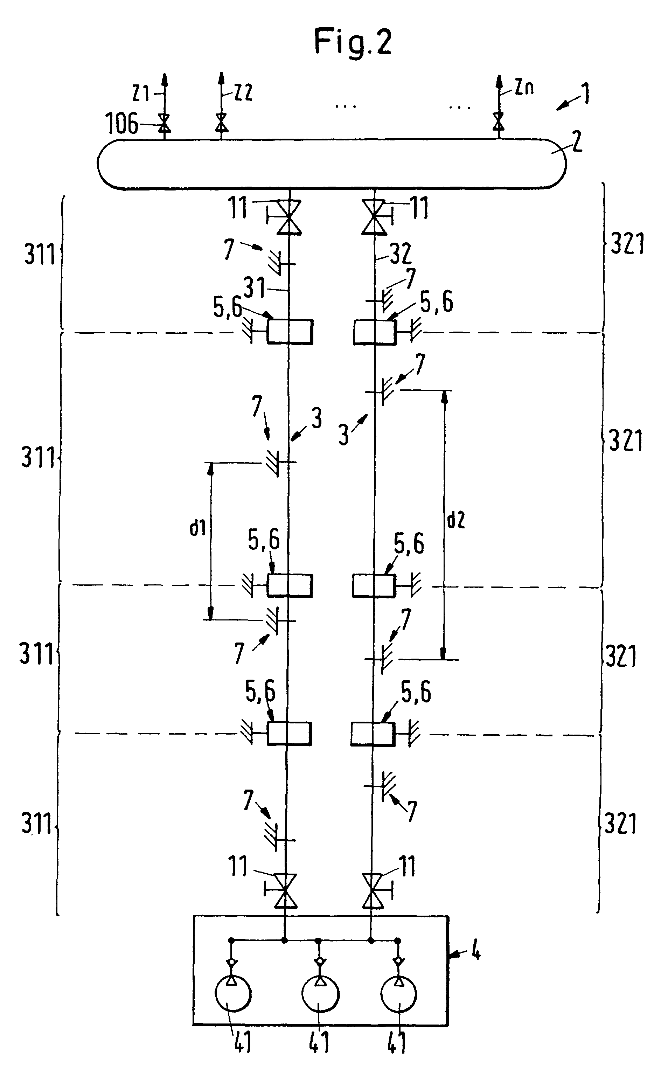

Fig. 2 zeigt in einer symbolischen Darstellung ein Ausführungsbeispiel einer erfindungsgemässen Versorgungsvorrichtung für ein Common Rail System, die gesamthaft mit dem Bezugszeichen 1 bezeichnet ist. Da es für das Prinzip egal ist, ob die erfindungsgemässe Versorgungsvorrichtung für ein Common Rail System zur Brennstoffeinspritzung oder zur Betätigung eines Hydrauliksystems oder für ein anderes Common Rail System Verwendung findet, werden diese Fälle im Folgenden nicht mehr unterschieden. Die Ausführungen gelten ganz allgemein für irgendein Common Rail System in einem Grossdieselmotor. Daher wird im Folgenden auch auf die Buchstaben "a" und "b" bei den Bezugszeichen verzichtet und der Druckspeicher mit 2, die Verbindungsmittel mit 3 und die Pumpeinrichtung mit 4 bezeichnet.

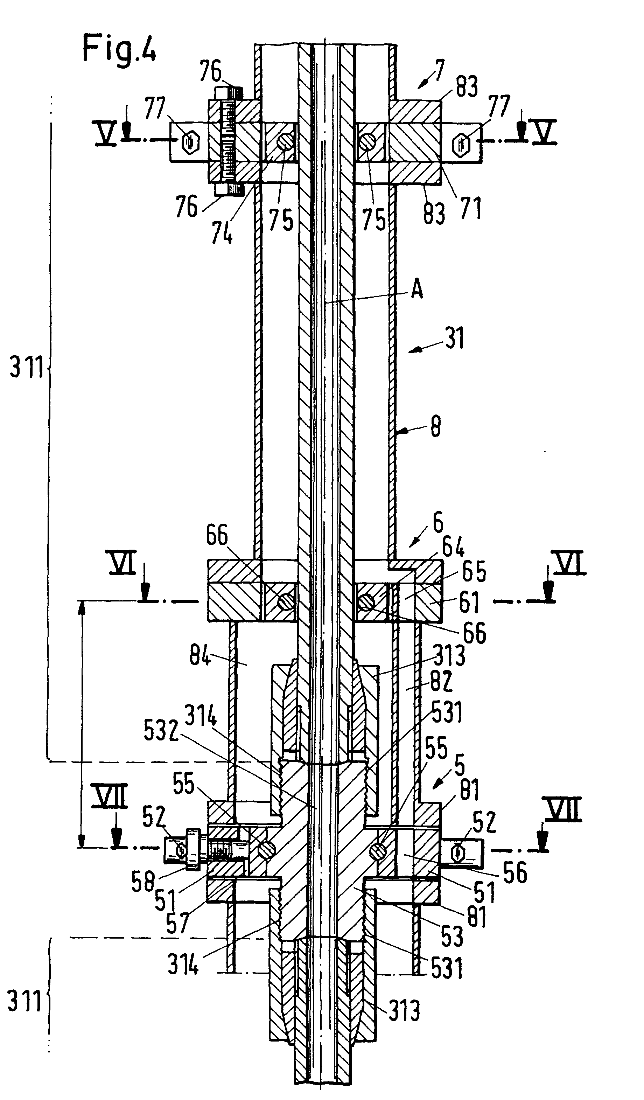

Erfindungsgemäss umfassen die Verbindungsmittel 3 zwei separate Druckleitungen 31,32, von denen jede mit der Pumpeinrichtung 4 und dem Druckspeicher 2 verbunden ist. In Fig. 2 sind die Druckleitungen 31,32 jeweils symbolisch durch einfache Linien dargestellt, eine detailliertere Darstellung findet sich in Fig. 4 und wird weiter hinten beschrieben. Die Druckleitungen 31 und 32 müssen nicht geradlinig verlaufen, so wie es in Fig. 2 dargestellt ist, sondern können Krümmungen, Biegungen oder sonstige Richtungswechsel aufweisen. Dies hängt im konkreten Anwendungsfall von den Platzverhältnissen im bzw. am Motor ab, von der jeweiligen örtlichen Anordnung der Pumpeinrichtung 4 und des Druckspeichers 2 sowie eventuell von weiteren Gegebenheiten, welche bei der Führung der Druckleitungen 31,32 von der Pumeinrichtung 4 zum Druckspeicher 2 berücksichtigt werden müssen.

Wie dies für Common Rail Systeme üblich ist, ist der Druckspeicher 2 mit sämtlichen Zylindern 101 bzw. mit den Betätigungsorganen (z. B. Einspritzvorrichtungen, Auslassventile) der Zylinder 101 verbunden. Dies ist in Fig. 2 durch die Leitungen mit den Bezugszeichen Z1 bis Zn angedeutet, wobei n die Gesamtzahl der Zylinder des Grossdieselmotors ist. In jeder dieser Leitungen Z1 bis Zn ist jeweils ein Absperrventil 106 vorgesehen, sodass jeder Zylinder 101 einzeln von dem Druckspeicher 2 abgekoppelt werden kann.

Die Pumpeinrichtung 4 umfasst vorzugsweise mindestens zwei und insbesondere drei Pumpen 41, zum einen, um eine ausreichende Fördermenge zu gewährleisten, und zum anderen, um eine Redundanz zu realisieren. Falls eine der Pumpen 41 ausfällt, können die verbleibenden Pumpen 41 noch genügend Fluid in den Druckspeicher 2 fördern, um einen weiteren Betrieb des Grossdieselmotors zu gewährleisten.

Für das Hydrauliksystem zur Betätigung der Auslassventile 102 sind vorzugsweise drei Pumpen in der Pumpeinrichtung vorgesehen. Für das Common-Rail-System für den Brennstoff kann die Pumpeinrichtung je nach Grösse und Zylinderanzahl des Motors vier, sechs oder noch mehr Hochdruckpumpen aufweisen.

Jede der Druckleitungen 31,32 ist sowohl an ihrem mit dem Druckspeicher 2 verbundenen Ende als auch an ihrem mit der Pumpeinrichtung 4 verbundenen Ende jeweils mit einem Absperrorgan 11, beispielsweise einem Absperrventil, versehen. Im normalen, das heisst störungsfreien Betrieb fördert die Pumpeinrichtung 4 das Fluid parallel durch beide Leitungen in den Druckspeicher 2. Falls nun an einer der beiden Druckleitungen 31,32 eine starke Leckage oder ein sonstiger Schaden auftritt, kann diese Druckleitung durch Schliessen der Absperrorgane 11 an ihren beiden Enden vom System getrennt werden. Somit besteht keine Gefahr, dass über die schadhafte Druckleitung 31 bzw. 32 unkontrolliert Fluid aus dem System austritt und es somit z. B. zu einem grösserer Druckabfall im Druckspeicher 2 oder zu einer ungewünschten Entleerung des Druckspeichers 2 kommt. Die Versorgungsvorrichtung 1 kann dann nach dem Schliessen der Absperrorgane 11 an der schadhaften Druckleitung 31 oder 32 mit nur einer Druckleitung 32 oder 31 weiterbetrieben werden, sodass das Common Rail System zumindest mit reduzierter Leistung funktionsstüchtig bleibt.

Aus praktischen Gründen ist es bevorzugt, dass jede Druckleitung 31 bzw. 32 aus mehreren miteinander verbundenen Segmenten 311 bzw. 321 zusammengesetzt ist. Die Verbindungen 5 zwischen benachbarten Segmenten 311 oder 321, die vorzugsweise als Verschraubungen ausgestaltet sind, sind in Fig. 2 nur symbolisch dargestellt und werden weiter hinten im Zusammenhang mit Fig. 4 eingehender beschrieben. Solche Verschraubungen oder im allgemeinen Fall Verbindungen 5 sind empfindlich gegenüber Biegeschwingungen, welche in Druckleitungen entstehen, die über längere Strecken nicht abgestützt sind. Damit diese Biegeschwingungen nicht oder nur erheblich gedämpft auf die Verbindungen 5 einwirken können, ist die Druckleitung 31,32 in der Nähe jeder Verbindung 5 jeweils mittels einer Abstützung 6 fixiert. Die Abstützung 6 befindet sich jeweils in einer vorgegebenen Distanz von der Verbindung 5. Im Zusammenhang mit Fig. 4 wird weiter hinten noch im Detail erläutert, wie diese Abstützungen 6 ausgebildet sein können.

Wie dies Fig. 2 zeigt, verlaufen die beiden Druckleitungen 31 und 32 vorzugsweise parallel zueinander. Die Segmente 311 bzw. 321, aus denen sich die Druckleitungen 31 bzw. 32 zusammensetzen, sind jeweils paarweise gleich, das heisst zu jedem Segment 311 der einen Druckleitung 31 existiert ein baugleiches Segment 321 der anderen Druckleitung 32. Diese Massnahme hat den Vorteil, dass weniger Ersatzteile bereitgestellt werden müssen und die Druckleitungen 31,32 einfacher und somit auch kostengünstiger herstellbar sind. Zudem können im Bedarfsfall Segmente der einen Druckleitung 31 bzw. 32 in die andere Druckleitung 32 bzw. 31 eingesetzt werden.

Aufgrund der grossen Länge der Druckleitungen 31,32 sind ausser den Abstützungen 6 noch zusätzlich Zwischenabstützungen 7 zum Fixieren der Druckleitungen 31,32 vorgesehen, um Vibrationen und Schwingungen, insbesondere Biegeschwingungen, der Druckleitungen 31,32 zu vermeiden oder zumindest zu reduzieren. Wie dies Fig. 2 verdeutlicht, sind die Zwischenabstützungen 7, die jeweils am Motor bzw. am Motorengehäuse befestigt sind, so angeordnet, dass der Abstand d1 zwischen benachbarten Zwischenabstützungen 7 der einen Druckleitung 31 verschieden ist vom entsprechenden Abstand d2 zwischen benachbarten Zwischenabstützungen 7 der anderen Druckleitung 32. Durch diese Massnahme lässt es sich beispielsweise erreichen, dass die Biegeschwingungen der einen Druckleitung 31 bezüglich ihrer Frequenz und/oder Wellenlänge verschieden sind von den Biegeschwingungen der anderen Druckleitung 32. Somit ist das Belastungsspektrum für die beiden Druckleitungen 31,32 unterschiedlich, wodurch sich die Gefahr, dass beide Druckleitungen 31,32 gleichzeitig schadhaft werden, in erheblichem Masse reduzieren lässt.

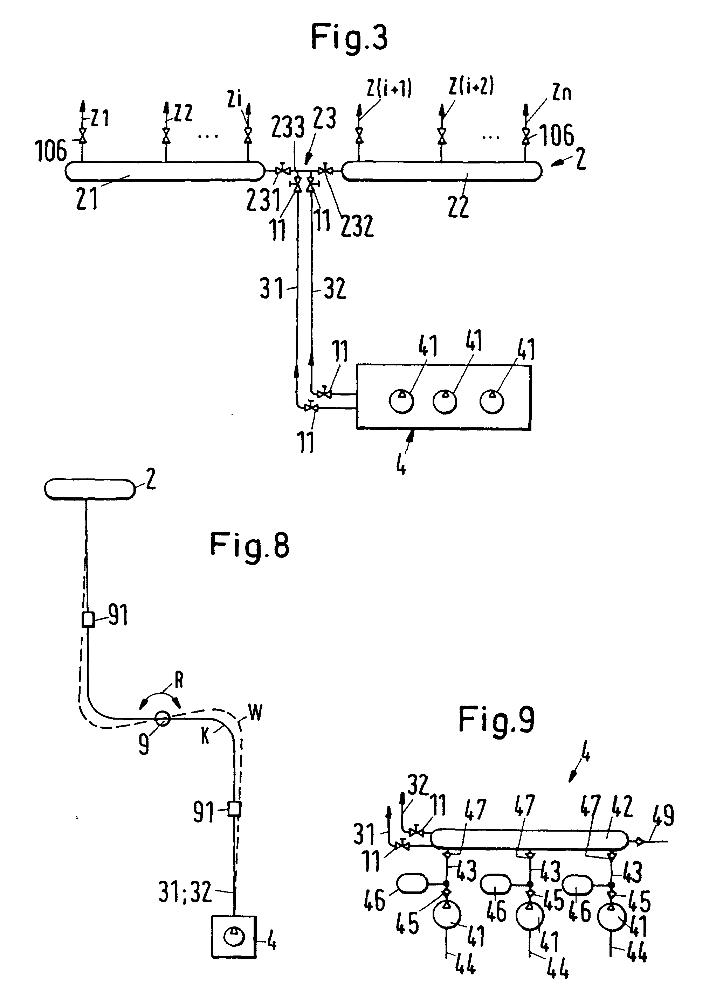

Fig. 3 zeigt eine Variante für die Ausgestaltung des Druckspeichers 2. Bei dieser Variante umfasst der Druckspeicher 2 zwei separate Speichereinheiten 21 und 22 sowie einen Verteiler 23, der sowohl mit den beiden Druckleitungen 31,32 verbunden ist als auch mit jeder der Speichereinheiten 21,22. Die eine Speichereinheit 21 ist mit den ersten i Zylindern verbunden, wobei 1≤ i ≤ (n-1) ist und n die Gesamtzahl der Zylinder des Motors bezeichnet. Dies ist in Fig. 3 durch die Leitungen Z1 bis Zi angedeutet. Die andere Speichereinheit 22 ist mit den übrigen (n-i) Zylindern verbunden, wie dies die Leitungen Z(i+1) bis Zn andeuten. Vorzugsweise ist i=n/2 für eine gerade Anzahl von Zylindern und i=(n/2 ± 0.5) im Falle einer ungeraden Zylinderanzahl des Motors.

Der Verteiler 23 umfasst eine Verbindungsleitung 233, welche sich von der einen Speichereinheit 21 bis zu der anderen Speichereinheit 22 erstreckt. In der Verbindungsleitung 233 ist ein erstes Speicherabstellventil 231 für die eine Speichereinheit 21 und ein zweites Speicherabstellventil 232 für die andere Speichereinheit 22 vorgesehen. Die beiden Druckleitungen 31,32 münden zwischen den beiden Speicherabstellventilen 231 und 232 in die Verbindungsleitung 233. Falls beide Speicherabstellventile 231 und 232 geöffnet sind, strömt das aus den Druckleitungen 31,32 kommende Fluid in beide Speichereinheiten 21,22. Ist dagegen nur das erste oder das zweite Speicherabstellventil 231 bzw. 232 geöffnet und das andere geschlossen, so strömt das Fluid nur in die eine oder nur in die andere Speichereinheit 21 bzw. 22.

Durch diese Variante des Druckspeichers 2 wird die Betriebssicherheit der Versorgungsvorrichtung 1 noch weiter erhöht. Kommt es beispielsweise in einem der beiden Speichereinheiten 21 oder 22 aufgrund einer Leckage oder eines sonstigen Schadens zu einem ungewollten stärkeren Druckabfall, so kann die entsprechende Speichereinheit 21 oder 22 durch Schliessen des zugehörigen Speicherabstellventils 231 bzw. 232 vom Common Rail System getrennt werden. Tritt beispielsweise in der Speichereinheit 21 ein Schaden auf, so wird das erste Speicherabstellventil 231 geschlossen, sodass das Fluid aus den Druckleitungen 31,32 nur noch in die Speichereinheit 22 strömt. Somit bleiben die mit dieser Speichereinheit 22 verbundenen Zylinder (i+1) bis n funktionstüchtig und der Grossdieselmotor kann in einem Notbetriebsmodus mit diesen Zylindern weiterlaufen. Ein Abstellen des gesamten Grossdieselmotors braucht also bei einem solchen Schaden bzw. während dessen Behebung nicht mehr zu erfolgen.

Bezugnehmend auf die Fig. 4-7 werden im Folgenden Details von möglichen Ausgestaltungen der Druckleitungen 31,32, der Verbindungen 5, der Abstützungen 6 und der Zwischenabstützungen 7 erläutert. Die Erläuterungen erfolgen anhand der einen Druckleitung 31, gelten aber in sinngemäss gleicher Weise auch für die andere Druckleitung 32. Als axiale Richtung wird im Folgenden die durch die Längsachse A der Druckleitung 31 festgelegte Richtung bezeichnet.

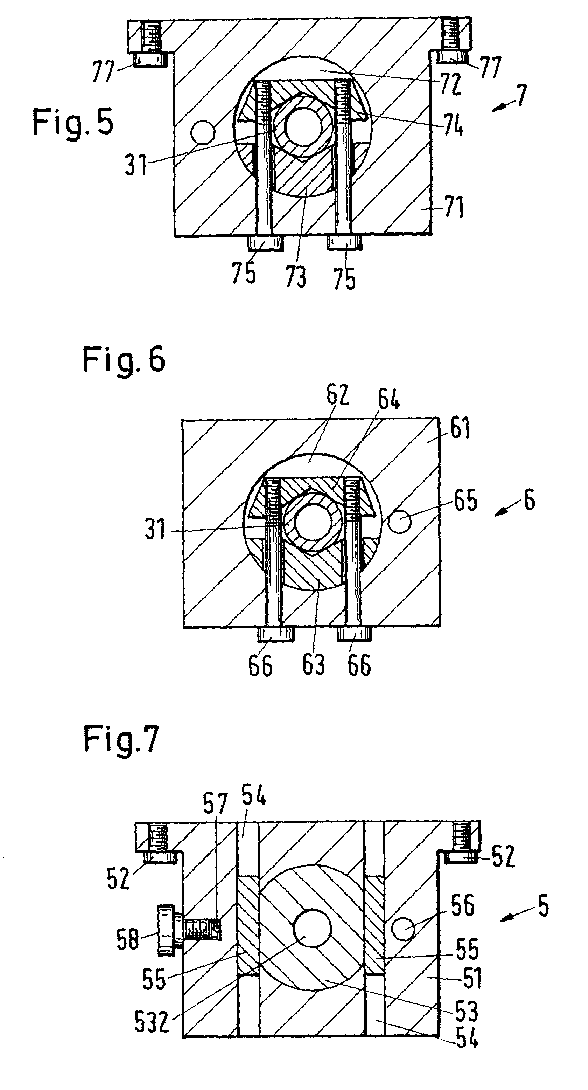

Fig. 4 zeigt in einer Längsschnittdarstellung einen Ausschnitt aus der Druckleitung 31, wobei zwei Segmente 311 dargestellt sind, welche mittels der als Verschraubung ausgestalteten Verbindung 5 miteinander verbunden sind. Fig. 5 zeigt einen Querschnitt durch die Zwischenabstützung 7 entlang der Schnittlinie V-V in Fig. 4. Fig. 6 zeigt einen Querschnitt durch die Abstützung 6 entlang der Schnittlinie VI-VI in Fig. 4 und Fig. 7 zeigt einen Querschnitt durch die Verbindung 5 entlang der Schnittlinie VII-VII in Fig. 4.

Die Druckleitung 31, die beispielsweise aus einem Stahl hergestellt wird, ist aus Sicherheitsgründen von einer Schutzleitung 8 umgeben, die mehrere Abschnitte umfasst. Die Schutzleitung 8 ist aus Sicherheitsgründen vorgesehen und verhindert im Falle einer Leckage oder eines Bruchs der Druckleitung 31, dass das unter Druck stehende Fluid unkontrolliert austritt. In die Schutzleitung 8 sind die Verbindung 5, die Abstützung 6 und die Zwischenabstützung 7 integriert.

Um zwei benachbarte Segmente 311 miteinander zu verbinden, sind die Verbindungen 5 (siehe Fig. 4 und Fig. 7) vorgesehen, die hier als Verschraubungen ausgestaltet sind. Die Verbindung 5 umfasst eine Grundplatte 51, welche zwischen zwei Flanschen 81 montiert ist. Die Flansche 81 sind jeweils an einem Ende eines Abschnitts der Schutzleitung 8 vorgesehen. Die Grundplatte 51 ist ferner mittels zwei Schrauben 52 am Grossdieselmotor befestigt. Die Grundplatte 51 weist eine zentrale, axial verlaufende Bohrung auf, in welcher ein Gewindestück 53 angeordnet ist, das die beiden einander zugewandten Enden der benachbarten Segmente 311 der Druckleitung 31 miteinander verbindet. Seitlich neben dem Gewindestück 53 ist jeweils eine Bohrung 54 vorgesehen, die sich senkrecht zur axialen Richtung durch die Grundplatte 51 hindurch erstreckt. In diese Bohrungen 54 wird jeweils ein Sicherungsstift 55 eingeschlagen. Die Sicherungsstifte 55 verhindern ein Verschieben des Gewindestücks 53 in axialer Richtung sowie ein Drehen des Gewindestücks 53 um die axiale Richtung. Ferner sind in der Grundplatte 51 noch ein Überlauf 56 und eine Drossel 57 vorgesehen, die jeweils als axiale Bohrungen ausgestaltet sind und sich in axialer Richtung durch die Grundplatte 51 hindurch erstrecken, sowie eine Kontrollschraube 58. Auf die Funktion dieser Elemente wird weiter hinten eingegangen.

Das Gewindestück 53 weist eine zentrale, durchgängige Bohrung 532 in axialer Richtung auf, welche die Strömungsverbindung für das Fluid zwischen den beiden benachbarten Segmenten 311 der Druckleitung 31 bildet. An seinen beiden axialen Enden ist das Gewindestück 53 jeweils mit einem Aussengewinde 531 versehen, welches der Verbindung mit den Segmenten 311 der Druckleitung 31 dient. Am Ende des Segments 311 ist eine Hülse 313 befestigt, welche über das Ende des Segments 311 hinausragt. Die Hülse 313 ist mit einem Innengewinde 314 versehen, welches mit dem Aussengewinde 531 zusammenwirkt, sodass das Segment 311 druckfest mit dem Gewindestück 53 verbunden ist. Das andere Segment 311 ist in gleicher Weise mit dem anderen axialen Ende des Gewindestücks 53 verschraubt, sodass die beiden benachbarten Segmente 311 miteinander verbunden sind.

In der Nähe der Verbindung 5, nämlich in einer Distanz H von ihr, ist die Abstützung 6 (siehe Fig. 4 und Fig. 6) für die Druckleitung 31 vorgesehen, deren primäre Funktion es ist, ein Vordringen von Biegeschwingungen zu der Verbindung 5 zu vermeiden bzw. deutlich zu reduzieren, sodass die Verbindung 5 nicht oder nur in sehr geringem Masse von solchen Biegeschwingungen belastet wird. Die Distanz H ist dadurch vorgegeben, dass einerseits die Abstützung 6 möglichst nahe am Ende des Segments 311 sein soll, und dass andererseits noch genügend Platz zwischen der Verbindung 5 und der Abstützung 6 vorhanden sein soll, um die Verbindung 5 zwischen den Segmenten 311 zu montieren bzw. zu demontieren.

Die Abstützung 6 umfasst eine Platte 61, welche ein Flansch eines Abschnitts der Schutzleitung 8 bildet. In der Platte 61 ist eine zentrale, durchgängige Bohrung 62 in axialer Richtung vorgesehen, durch welche hindurch sich die Druckleitung 31 erstreckt. In der Bohrung 62 ist eine erste Backe 63 und eine zweite Backe 64 angeordnet, zwischen denen die Druckleitung 31 angeordnet ist. Die der Druckleitung 31 abgewandte Aussenseite der ersten Backe 63 ist von ihrer Form an die innere Wandung der zentralen Bohrung 62 angepasst. Mittels zwei Schrauben 66, die sich jeweils durch die Platte 61 und durch die erste Backe 63 hindurch bis in die zweite Backe 64 erstrecken, kann die zweite Backe 64 gegen die erste Backe 63 gezogen werden, sodass die Druckleitung 31 zwischen den beiden Backen 63, 64 eingespannt und somit fixiert ist. Die Abstützung 6 selbst braucht nicht zusätzlich am Motor befestigt zu sein.

Neben der zentralen Bohrung 62 weist die Platte 61 noch einen Überlauf 65 auf, der als axiale Bohrung ausgestaltet ist.

Wie dies Fig. 4 zeigt, weist die Schutzleitung 8 in dem Abschnitt zwischen der Abstützung 6 und der Verbindung 5 einen grösseren Aussendurchmesser auf als in den übrigen Abschnitten. In diesem erweiterten Abschnitt ist ein in axialer Richtung verlaufendes Überlaufrohr 82 vorgesehen, welches den Überlauf 65 in der Abstützung 6 mit dem Überlauf 56 in der Verbindung 5 verbindet.

Die Zwischenabstützung 7 (siehe Fig. 4 und Fig. 5) umfasst eine Platte 71, die zwischen zwei Flanschen 83 angeordnet ist. Die Flansche 83 sind jeweils an einem Ende eines Abschnitts der Schutzleitung 8 angeordnet und mittels Schrauben 76 an der Platte 71 befestigt. Die Platte 71 ist mit Schrauben 77 am Grossdieselmotor fixiert. In sinngemäss gleicher Weise wie dies für die Platte 61 der Abstützung 6 beschrieben wurde, ist in der Platte 71 der Zwischenabstützung 7 eine zentrale, durchgängige Bohrung 72 in axialer Richtung vorgesehen, durch welche hindurch sich die Druckleitung 31 erstreckt. In der Bohrung 72 ist eine erste Backe 73 und eine zweite Backe 74 angeordnet, zwischen denen die Druckleitung 31 angeordnet ist. Die der Druckleitung 31 abgewandte Aussenseite der ersten Backe 73 ist von ihrer Form an die innere Wandung der zentralen Bohrung 72 angepasst. Mittels zwei Schrauben 75, die sich jeweils durch die Platte 71 und durch die erste Backe 73 hindurch bis in die zweite Backe 74 erstrecken, kann die zweite Backe 74 gegen die erste Backe 73 gezogen werden, sodass die Druckleitung 31 zwischen den beiden Backen 73, 74 eingespannt und somit fixiert ist.

Bei der hier beschriebenen Ausgestaltung der Druckleitung 31 bzw. 32, sind an der Druckleitung Mittel zum Lokalisieren von Leckagen vorgesehen. Diese Mittel umfassen mehrere Reservoirs 84, von denen jedes von einem Abschnitt einer der Schutzleitungen 8 und von einer der Druckleitungen 31,32 begrenzt wird. Für jedes Reservoir 84 ist ein Überlaufrohr 82 vorgesehen, durch welches das Fluid aus diesem Reservoir 84 in das benachbarte, näher an der Pumpeinrichtung 4 liegende Reservoir abfliessen kann. Für jedes Reservoir 84 sind Kontrollmittel vorgesehen, hier die Kontrollschrauben 58 in der Verbindung 5, mit denen das Vorhandensein von Fluid in diesem Reservoir 84 überprüfbar ist.

In Fig. 4 ist ein solches Reservoir 84 dargestellt. Es wird von demjenigen Abschnitt der Schutzleitung 8 begrenzt, welcher einen grösseren Aussendurchmesser aufweist und zwischen der Verbindung 5 und der Abstützung 6 angeordnet ist, sowie von der Druckleitung 31, der Platte 61 der Abstützung 6 und der Grundplatte 51 der Verbindung 5.

Es versteht sich, dass an jeder Druckleitung 31,32 jeweils zwischen jeder Verbindung 5 und der zugehörigen Abstützung 6 ein solches Reservoir 84 vorgesehen ist.

Falls nun beispielsweise in dem darstellungsgemäss (Fig. 4) oberen Segment 311 der Druckleitung 31 eine Leckage oder ein Bruch auftritt, so füllt das austretende Fluid zunächst das Reservoir 84. Ist dieses Reservoir gefüllt, so steigt das Fluid durch die zentrale Bohrung 62 der Platte 61 und kann dann durch den Überlauf 65 in der Platte 61 in das Überlaufrohr 82 gelangen. Durch dieses und den Überlauf 56 in der Grundplatte 51 der Verbindung 5 gelangt das Fluid in das benachbarte, nächst tiefere Reservoir, das näher an der Pumpeinrichtung 4 liegt. Somit füllen sich sukzessive alle Reservoirs zwischen der Leckstelle und der Pumpeinrichtung 4. Nachdem das unterste, das heisst, das am nächsten an der Pumpeinrichtung 4 befindliche Reservoir gefüllt ist, wird die Leckage durch einen Fühler, beispielsweise einen Schwimmerschalter oder einen anderen Detektor, registriert und eine entsprechende Warnmeldung abgegeben.

Dann werden nacheinander, an demjenigen Reservoir beginnend, das am nächsten am Druckspeicher 2 liegt, die Kontrollschrauben 58 in den Grundplatten 51 geöffnet, wodurch jeweils feststellbar ist, ob in dem Reservoir, an dessen unteren Ende die gerade geöffnete Kontrollschraube 58 angeordnet ist, Fluid vorhanden ist oder nicht. Auf diese Weise lässt sich das Segment 311 bzw. 321 der Druckleitung 31 bzw. 32 lokalisieren, welches schadhaft ist.

Natürlich können anstelle der Kontrollschrauben 58 auch andere Kontrollmittel vorgesehen sein, beispielsweise Sichtfenster oder Sensoren, mittels denen feststellbar ist, ob in dem jeweiligen Reservoir Fluid vorhanden ist oder nicht.

Nachdem eine Leckage aufgetreten ist, wird die entsprechende Druckleitung 31 oder 32 durch Schliessen der entsprechenden Absperrorgane 11 verschlossen, sodass kein weiteres Fluid mehr austreten kann. Je nach Ort der Leckage sind dann jedoch noch einige der Reservoire 84 mit Fluid gefüllt. Über die als Bohrung ausgestaltete Drossel 57 in der Grundplatte 51 der Verbindung 5, welche das untere Ende des Reservoirs 84 bildet, kann das Fluid aus dem jeweiligen Reservoir 84 abfliessen. Die Drossel 57 ist so bemessen, dass sich ein gefülltes, nicht mehr mit Fluid "gespeistes" Reservoir 84 erst nach einigen Minuten, beispielsweise etwa 15 Minuten, von selbst entleert hat. Diese Zeitspanne ist ausreichend, um das schadhafte Segment 311 bzw. 321 wie vorne beschrieben zu lokalisieren. Die in jedem Reservoir 84 vorgesehen Drossel 57 bewirkt somit, dass das durch die Leckage ausgetretene Fluid kontrolliert abfliesst. Danach kann die Schutzleitung 8 geöffnet werden, ohne dass die Gefahr eines unkontrollierten Austreten des Fluids nach aussen besteht.

Fig. 8 veranschaulicht in symbolischer Darstellung noch eine weitere Massnahme, die insbesondere für solche Versorgungsvorrichtungen 1 vorteilhaft ist, mit denen Brennstoff geförderet wird. Als Brennstoff für Grossdieselmotoren wird üblicherweise Schweröl verwendet. Dieses muss normalerweise auf Temperaturen von über 100°C aufgeheizt werden, damit es eine für die Förderung und Einspritzung ausreichend geringe Viskosität besitzt. Durch das vorgewärmte Schweröl, das durch die Druckleitungen 31,32 gefördert wird, erwärmen sich diese stark. Aufgrund der grossen Länge der Druckleitungen 31,32 kann deren temperaturbedingte Längenausdehnung mehrere Millimeter betragen. Da üblicherweise die Druckleitungen 31,32 für den Brennstoff mit ihren Enden auf der einen Seite an der Pumpvorrichtung 4 und auf der anderen Seite an dem Druckspeicher 2 fixiert sind, muss die thermisch bedingte Längenänderung durch Deformationen der Druckleitungen 31,32 aufgenommen werden, damit keine unzulässig hohen Spannungen auftreten.

Dazu ist gemäss der in Fig. 8 veranschaulichten Variante für jede Druckleitung 31, 32 eine Drehhalterung 9 vorgesehen, welche so ausgestaltet ist, dass sie eine Drehung der Druckleitung 31,32 um eine Achse erlaubt, die im wesentlichen senkrecht zur Längserstreckung der Druckleitung 31, 32 verläuft. Weil es für das Verständnis ausreicht, ist in Fig. 8 nur eine Druckleitung dargestellt. Natürlich ist auch an der anderen Druckleitung eine solche Drehhalterung 9 vorgesehen.

Die Drehhalterung 9, die einerseits fest mit der Druckleitung 31,32 verbunden ist und andererseits am Motor fixiert ist, ist so ausgestaltet, dass die Druckleitung 31,32 nur um eine Achse drehbar ist, welche senkrecht auf der Zeichenebene von Fig. 8 steht und durch die Drehhalterung 9 geht. Die mögliche Drehbewegung ist durch den Doppelpfeil R angedeutet. Ferner sind zwei Halterungen 91 vorgesehen, mit denen die Druckleitung 31,32 am Motor befestigt ist, und die eine seitliche Nachgiebiegkeit in der Zeichenebene von Fig. 8 aufweisen, also senkrecht zu der Achse, um welche die Druckleitung 31,32 drehbar ist.

Durch die Drehhalterung 9 werden die thermisch bedingten Deformationen in kontrollierter Weise aufgenommen, das heisst die Druckleitung 31,32 bleibt auch bei einer thermisch bedingten Längenänderung in einer kontrollierten Lage. Ein unkontrolliertes Ausweichen der Druckleitung, beispielsweise senkrecht zur Zeichenebene von Fig. 8. Ist nicht möglich. In Fig. 8 ist die Druckleitung 31,32 im kalten Zustand durch die durchgezogene Linie K dargestellt, während die gestrichelte Linie W die Druckleitung 31,32 im heissen Zustand zeigt. Es ist zu erkennen, dass die thermische Längenänderung zu einer Drehung der Druckleitung in der Drehhalterung 9 führt, wodurch sich die Druckleitung 31,32 in vorgegebener und damit kontrollierter Weise deformiert.

Fig. 9 zeigt noch ein bevorzugtes Ausführungsbeispiel für die Pumpeinrichtung 4. Bei diesem Ausführungsbeispiel sind drei Pumpen 41 vorgesehen sowie ein Zwischenspeicher 42. Jede Pumpe 41 ist jeweils über eine separate Pumpenleitung 43 mit dem Zwischenspeicher 42 verbunden und weist ist in an sich bekannter Weise an ihrem Ausgang ein Rückschlagventil 45 auf. Die beiden Druckleitungen 31,32 sind jeweils an ihrem einen Ende mit dem Zwischenspeicher 42 und an ihrem anderen Ende mit dem Druckspeicher 2 (in Fig. 9 nicht dargestellt) verbunden. Das zu fördernde Fluid gelangt durch Zuführungen 44 zu den Pumpen 41. Ferner ist an dem Zwischenspeicher noch eine Leitung 49 angeschlossen, die mit dem Niederdrucksystem für das Fluid verbunden ist. Über diese Leitung 49 kann beispielsweise der Zwischenspeicher 42 mit Fluid unter Niederdruck gefüllt werden, bevor die Pumpen 41 in Betrieb genommen werden.

Der Zwischenspeicher 42 weist ein deutlich kleineres Volumen auf als der Druckspeicher 2. Der Druckspeicher 2 hat beispielsweise ein Volumen von 15 dm³, während der Zwischenspeicher 42 ein Volumen von beispielsweise etwa 1,2 dm³ hat. Der Zwischenspeicher 42 dient dazu, die von den Pumpen 41 generierten Druckschläge und Druckpulsationen zu dämpfen. Insbesondere in Fällen, wo nur eine kleine Anzahl, z. B. zwei oder drei, Pumpen 41 zur Versorgung des Common Rail Systems vorgesehen sind, und diese Pumpen 41 grosse Hubvolumen haben, können starke Druckschwankungen wie Druckpulsationen in den Druckleitungen auftreten. Diese mechanischen Beanspruchung kann Schäden an den Druckleitungen verursachen. Daher ist bei dem hier beschriebenen Ausführungsbeispiel der Pumpeinrichtung 4 der Zwischenspeicher 42 vorgesehen, der diese dynamischen Druckanteile zumindest dämpft, bevor das zu fördernde Fluid in die Druckleitungen 31,32 gelangt.

Als weitere vorteilhafte Massnahme zum Dämpfen der Druckpulsationen ist an jeder der separaten Pumpenleitungen 43 ein Pumpenspeicher 46 vorgesehen. Die Pumpenspeicher 46 dämpfen jeweils individuell die von der zugehörigen Pumpe 41 generierten Druckpulsationen, sodass diese bereits abgeschwächt werden, bevor das Fluid in den Zwischenspeicher 42 gelangt. Durch diesen erfolgt dann eine weitere Dämpfung, bevor das Fluid in die Druckleitungen 31,32 gelangt. Die Pumpenspeicher 46 sind jeweils deutlich kleiner als der Zwischenspeicher 42. Vorzugsweise ist das Volumen jedes Pumpenspeichers 46 um einen Faktor zwei bis acht, speziell etwa einen Faktor 2,5 kleiner als das Volumen des Zwischenspeichers 42.

Aus Sicherheitsgründen weist vorzugsweise jede Pumpenleitung 43 an ihrem mit dem Zwischenspeicher 42 verbundenen Ende ein weiteres Rückschlagventil 47 auf. Auf diese Weise kann die Pumpeinrichtung 4 und damit die gesamte Versorgungsvorrichtung auch im Falle eines Bruchs oder sonstigen Schadens an einer Pumpenleitung 43 weiterbetrieben werden, weil das Rückschlagventil 47 der schadhaften Pumpenleitung 43 ein Austreten des Fluids aus der Versorgungsvorrichtung über die schadhafte Pumpenleitung 43 verhindert.

Alternativ können die einzelnen Pumpenleitungen 43 auch selbst jeweils als Pumpenspeicher 46 ausgestaltet sein. Dazu wird ihr jeweiliges Volumen so bemessen, beispielsweise durch einen entsprechend grossen Leitungsquerschnitt, dass die Pumpenleitungen 43 die Funktion ausüben, die von der zugehörigen Pumpe 41 generierten Druckpulsationen zu dämpfen. In diesem Falle sind keine separaten Pumpenspeicher 46 notwendig.

Natürlich sind auch solche Ausgestaltungen der erfindungsgemässen Versorgungsvorrichtung möglich, bei denen mehr als zwei Druckleitungen zwischen dem Druckspeicher 2 und der Pumpeinrichtung 4 vorgesehen sind.

## Patentansprüche

1. Versorgungsvorrichtung für ein Common Rail System in einem Grossdieselmotor, mit einem Druckspeicher (2) für ein Fluid, mit einer Pumpeinrichtung (4) zum Fördern des Fluids in den Druckspeicher (2), sowie mit Verbindungsmitteln (3,31,32), durch welche das von der Pumpeinrichtung (4) geförderte Fluid in den Druckspeicher (2) einbringbar ist, wobei die Verbindungsmittel zwei separate Druckleitungen (3,31,32) umfassen, von denen jede mit der Pumpeinrichtung (4) und dem Druckspeicher (2) verbunden ist, **dadurch gekennzeichnet, dass** jede Druckleitung (31,32) sowohl an ihrem mit dem Druckspeicher (2) verbundenen Ende als auch an ihrem mit der Pumpeinrichtung (4) verbundenen Ende ein Absperrorgan (11) aufweist.

2. Versorgungsvorrichtung nach Anspruch 1, bei welcher jede Druckleitung (31,32) mehrere miteinander verbundene Segmente (311,321) umfasst, wobei in der Nähe jeder Verbindung (5) zwischen benachbarten Segmenten (311,321) jeweils eine Abstützung (6) zum Fixieren der Druckleitung (31,32) vorgesehen ist.

3. Versorgungsvorrichtung nach Anspruch 2, bei welcher die beiden Druckleitungen (31,32) im wesentlichen parallel zueinander verlaufen, und bei welcher die Segmente (311,321) für die beiden Druckleitungen (31,32) paarweise gleich sind.

4. Versorgungsvorrichtung nach einem der vorangehenden Ansprüche, bei welcher für jede Druckleitung (31,32) mehrere Zwischenabstützungen (7) zum Fixieren der Druckleitung (31,32) vorgesehen sind, wobei der Abstand (d1)zwischen benachbarten Zwischenabstützungen (7) der einen Druckleitung (31) verschieden ist vom Abstand (d2) benachbarter Zwischenabstützungen (7) der anderen Druckleitung (32).

5. Versorgungsvorrichtung nach einem der vorangehenden Ansprüche, bei welcher der Druckspeicher (2) zwei separate Speichereinheiten (21,22) umfasst, sowie einen mit den beiden Druckleitungen (31,32) verbundene Verteiler (23), der das Fluid aus den Druckleitungen (31,32) wahlweise in beide Speichereinheiten (21,22) leitet oder nur in die eine (21) oder nur in die andere (22) der beiden Speichereinheiten.

6. Versorgungsvorrichtung nach einem der vorangehenden Ansprüche, bei welcher an jeder Druckleitung (31,32) Mittel zum Lokalisieren von Leckagen vorgesehen sind.

7. Versorgungsvorrichtung nach Anspruch 6, bei welcher jede Druckleitung (31,32) jeweils von einer mehrere Abschnitte umfassenden Schutzleitung (8) umgeben ist, und bei welcher die Mittel zum Lokalisieren von Leckagen mehrere Reservoirs (84) umfassen, von denen jedes von einem Abschnitt einer der Schutzleitungen (8) und von einer der Druckleitungen (31,32) begrenzt wird, wobei für jedes Reservoir (84) ein Überlaufrohr (82) vorgesehen ist, durch welches das Fluid aus diesem Reservoir (84) in das benachbarte, näher an der Pumpeinrichtung (4) liegende Reservoir abfliessen kann, und wobei für jedes Reservoir (84) Kontrollmittel (58) vorgesehen sind, mit denen das Vorhandensein von Fluid in diesem Reservoir (84) überprüfbar ist.

8. Versorgungsvorrichtung nach einem der vorangehenden Ansprüche, bei welcher für jede Druckleitung (31,32) eine Drehhalterung (9) vorgesehen ist, welche so ausgestaltet ist, dass sie eine Drehung der Druckleitung (31,32) um eine Achse erlaubt, die im wesentlichen senkrecht zur Längserstreckung der Druckleitung (31,32) verläuft.

9. Versorgungsvorrichtung nach einem der vorangehenden Ansprüche, bei welcher die Pumpeinrichtung (4) mehrere Pumpen (41) sowie einen Zwischenspeicher (42) zum Dämpfen von Druckpulsationen umfasst, wobei jede Pumpe (41) jeweils über eine separate Pumpenleitung (43) mit dem Zwischenspeicher (42) verbunden ist, und die beiden Druckleitungen (31,32) mit dem Zwischenspeicher (42) verbunden sind.

10. Versorgungsvorrichtung nach Anspruch 9, bei welchem jede Pumpenleitung (43) an ihrem mit dem Zwischenspeicher (42) verbundenen Ende ein Rückschlagventil (47) aufweist.

11. Versorgungsvorrichtung nach Anspruch 9 oder 10, bei welcher jede Pumpenleitung (43) einen Pumpenspeicher (46) aufweist oder als Pumpenspeicher ausgestaltet ist, wobei der Pumpenspeicher (46) zum Dämpfen der von der zugehörigen Pumpe (41) generierten Druckpulsationen dient und vorzugsweise ein Volumen aufweist, das in einem Verhältnis von eins zu zwei bis eins zu acht zum Volumen des Zwischenspeichers (42) steht.

12. Grossdieselmotor mit einer Versorgungsvorrichtung gemäss einem der vorangehenden Ansprüche.

## Claims

1. Supply apparatus for a common rail system in a large diesel engine, having a pressure reservoir (2) for a fluid, a pump device (4) for feeding the fluid into the pressure reservoir (2) and connection means (3, 31, 32) through which the fluid which is fed by the pump device (4) can be introduced into the pressure reservoir (2), wherein the connection means comprise two separate pressure lines (3, 31, 32), each of which is connected to the pump device (4) and to the pressure reservoir (2), **characterized in that** each pressure line (31, 32) has a shutoff member (11) both at its end which is connected to the pressure reservoir (2) and at its end which is connected to the pump device (4).

2. Supply apparatus in accordance with claim 1, in which each pressure line (31, 32) comprises a plurality of segments (311, 321) which are connected to one another, with a respective support (6) for the fixing of the pressure line (31, 32) being provided in the vicinity of each connection (5) between adjacent segments (311, 321).

3. Supply apparatus in accordance with claim 2, in which the two pressure lines (31, 32) extend substantially parallel to one another and in which the segments (311, 321) for the two pressure lines (31, 32) are pair-wise identical.

4. Supply apparatus in accordance with any one of the preceding claims, in which for each pressure line (31, 32) a plurality of intermediate supports (7) are provided for the fixing of the pressure line (31, 32), with the distance (d1) between adjacent intermediate supports (7) of the one pressure line (31) being different from the distance (d2) of adjacent intermediate supports (7) of the other pressure line (32).

5. Supply apparatus in accordance with any one of the preceding claims, in which the pressure reservoir (2) comprises two separate storage units (21, 22) and a distributor (23) which is connected to the two pressure lines (31, 32) and which selectively conducts the fluid from the pressure lines (31, 32) into both storage units (21, 22) or only into the one (21) or the other (22) of the two storage units.

6. Supply apparatus in accordance with any one of the preceding claims, in which means for localizing leakages are provided at each pressure line (31, 32).

7. Supply apparatus in accordance with claim 6, in which each pressure line (31, 32) is surrounded by a respective protective conduit (8) which comprises a plurality of sections, and in which the means for localizing leakages includes a plurality of reservoirs (84), each of which is bounded by a section of one of the protective conduits (8) and by one of the pressure lines (31, 32), with an overflow tube (82) being provided for each reservoir (84) through which the fluid can flow out of this reservoir (84) into the adjacent reservoir which lies closer to the pump device (4), and with control means (58) being provided for each reservoir (84) by means of which the presence of fluid in this reservoir (84) can be tested for.

8. Supply apparatus in accordance with any one of the preceding claims, in which a rotational holder (9) is provided for each pressure line (31, 32) and is designed in such a manner that it permits a rotation of the pressure line (31, 32) about an axis which extends substantially perpendicularly to the longitudinal extent of the pressure line (31, 32).

9. Supply apparatus in accordance with any one of the preceding claims, in which the pump device (4) includes a plurality of pumps (41) and an intermediate reservoir (42) for the damping of pressure pulsations, with each pump (41) being connected to the intermediate reservoir (42) via a respective separate pump line (43) and with the two pressure lines (31, 32) being connected to the intermediate reservoir (42).

10. Supply apparatus in accordance with claim 9, in which each pump line (43) has a non-return valve (47) at its end which is connected to the intermediate reservoir (42).

11. Supply apparatus in accordance with claim 9 or claim 10, in which each pump line (43) has a pump reservoir (46) or is designed as a pump reservoir, with the pump reservoir (46) serving to damp the pressure pulsations which are generated by the associated pump (41) and preferably having a volume which is in a ratio of from one to two up to one to eight to the volume of the intermediate reservoir (42).

12. Large diesel engine comprising a supply apparatus in accordance with any one of the preceding claims.

## Revendications

1. Dispositif d'alimentation pour un système de rail commun dans un gros moteur diesel, avec un accumulateur de pression (2) pour un fluide, dispositif de pompe (4) pour refouler le fluide dans l'accumulateur de pression (2), ainsi que des moyens de connexion (3, 31, 32) par lesquels le fluide refoulé du dispositif de pompe (4) peut être introduit dans l'accumulateur de pression (2), moyennant quoi les moyens de connexion incluent deux conduites de pression séparées (3, 31, 32), parmi lesquelles chacune est connectée au dispositif de pompe (4) et à l'accumulateur de pression (2), **caractérisée en ce que** chaque conduite de pression (31, 32) comprend un organe de verrouillage (11) tant sur son extrémité connectée à l'accumulateur de pression (2), que sur son extrémité connectée au dispositif de pompe (4).

2. Dispositif d'alimentation selon la revendication 1, dans laquelle chaque conduite de pression (31, 32) contient plusieurs segments (311, 321) connectés les uns aux autres, moyennant quoi à proximité de chaque connexion (5) entre les segments voisins (311, 321) est prévu selon le cas un support (6) pour la fixation de la conduite de pression (31, 32).

3. Dispositif d'alimentation selon la revendication 2, dans laquelle les deux conduites de pression (31, 32) s'étendent sensiblement parallèlement l'une à l'autre, et dans laquelle les segments (311, 321) sont égaux paire par paire pour les deux conduites de pression (31, 32).

4. Dispositif d'alimentation selon l'une quelconque des revendications précédentes, dans laquelle pour chaque conduite de pression (31, 32) sont prévus plusieurs supports intermédiaires (7) pour fixer la conduite de pression (31, 32), moyennant quoi la distance (d1) entre les supports intermédiaires (7) voisins d'une conduite de pression (31) est différente de la distance (d2) des supports intermédiaires (7) voisins de l'autre conduite de pression (32).

5. Dispositif d'alimentation selon l'une quelconque des revendications précédentes, dans laquelle l'accumulateur de pression (2) contient deux unités de stockage séparées (21, 22), ainsi qu'un distributeur (23) connecté aux deux conduites de pression (31, 32), qui conduit le fluide des conduites de pression (31, 32) au choix, soit dans les deux unités de stockage (21, 22), soit dans seulement l'une (21) ou l'autre (22) de ces deux unités.

6. Dispositif d'alimentation selon l'une quelconque des revendications précédentes, dans laquelle sur chaque conduite de pression (31, 32) sont prévues des moyens pour localiser les fuites.

7. Dispositif d'alimentation selon la revendication 6, dans laquelle chaque conduite de pression (31, 32) est enveloppée selon le cas par une conduite de protection (8) contenant plusieurs segments, et dans laquelle les moyens pour localiser les fuites incluent plusieurs réservoirs (84), dont chacun est borné par un segment d'une des conduites de protection (8) et par une des conduites de pression (31, 32), moyennant quoi un tuyau de trop-plein (82) est prévu pour chaque réservoir (84), par lequel le fluide peut s'écouler de ce réservoir (84) dans un réservoir voisin, plus proche du dispositif de pompe (4), et moyennant quoi pour chaque réservoir (84) sont prévus des moyens de contrôle (58), avec lesquels il est possible de vérifier la disponibilité effective du fluide dans ce réservoir (84).

8. Dispositif d'alimentation selon l'une quelconque des revendications précédentes, dans laquelle pour chaque conduite de pression (31, 32) est prévu un support de rotation (9), qui est configuré de sorte à permettre le pivotement de la conduite de pression (31, 32) autour d'un axe, qui court sensiblement verticalement par rapport à l'extension longitudinale de la conduite de pression (31, 32).

9. Dispositif d'alimentation selon l'une quelconque des revendications précédentes, dans laquelle le dispositif de pompe (4) contient plusieurs pompes (41) ainsi qu'un accumulateur intermédiaire (42) pour amortir les pulsations de pression, moyennant quoi chaque pompe (41) est connectée selon le cas par une conduite de pompe séparée (43) à l'accumulateur intermédiaire (42) et les deux conduites de pression (31, 32) sont connectées à l'accumulateur intermédiaire (42).

10. Dispositif d'alimentation selon la revendication 9, dans laquelle chaque conduite de pompe (43) comprend à son extrémité connectée à l'accumulateur intermédiaire (42) une soupape de retenue (47).

11. Dispositif d'alimentation selon la revendication 9 ou 10, dans laquelle chaque conduite de pompe (43) comprend un accumulateur de pompe (46) ou est configurée comme un accumulateur de pompe, moyennant quoi l'accumulateur de pompe (46) sert à amortir les pulsations de pression générées par la pompe (41) respective et comprend de préférence un volume se trouvant dans une proportion de un à deux jusqu'à de un à huit par rapport au volume de l'accumulateur intermédiaire (42).

12. Gros moteur diesel avec un dispositif d'alimentation selon l'une quelconque des revendications précédentes.
